(19) Europäisches Patentamt

European Patent Office

Office européen des brevets

(11) **EP 1 683 982 A2**

(12) **EUROPÄISCHE PATENTANMELDUNG**

(43) Veröffentlichungstag:
26.07.2006 Patentblatt 2006/30

(51) Int Cl.:
*F16D 48/06* (2006.01)

(21) Anmeldenummer: 05027986.8

(22) Anmeldetag: **21.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.01.2005 DE 102005002590**

(71) Anmelder: **LuK Lamellen und Kupplungsbau Beteiligungs KG**
**77815 Bühl (DE)**

(72) Erfinder:
• **Jäggle, Gerd**
**77880 Sasbach (DE)**
• **Berger, Reinhard, Dr.**
**77815 Bühl (DE)**

(54) **Verfahren und Vorrichtung zum Erkennen einer Schädigung einer Kupplung mit wenigstens zwei durch Reibeingriff Drehmoment übertragenden Bauteilen**

(57) Ein Verfahren zum Erkennen einer Schädigung einer Kupplung mit wenigstens zwei durch Reibeingriff Drehmoment übertragenden Bauteilen, enthält folgende Schritte: Bestimmen der durch Schlupf zwischen den Drehmoment übertragenden Bauteilen in die Reibflächen der Bauteile eingetragenen Reibleistung L, Errechnen eines Einzelschädigungswertes ESW entsprechend der Funktion ESW = f(L, t), wobei t die Zeit ist, und Werten als Kupplungseinzelschädigung, wenn ESW einen vorbestimmten Wert übersteigt.

EP 1 683 982 A2

**Beschreibung**

Die Erfindung betrifft ein Verfahren und eine Vorrichtung zum Erkennen einer Schädigung einer Kupplung mit wenigstens zwei durch Reibeingriff Drehmoment übertragenden Bauteilen.

In modernen Kraftfahrzeugen werden zunehmend automatisierte Kupplungen eingesetzt, deren Reibscheiben mittels von einem Steuergerät gesteuerten motorischen Aktoren in Drehmoment übertragenden Eingriff gebracht werden. Sowohl für das Anfahren als auch für Schaltvorgänge ist ein einwandfreier Betrieb der Kupplung, d.h. eine genaue Einstellbarkeit des jeweils übertragbaren Kupplungsmoments wichtig.

Aus der DE 101 31 434 A1 ist eine Verschleiß-Erkennungseinrichtung für eine Kraftfahrzeug-Scheibenkupplung bekannt, bei der in Abhängigkeit von Adaptionen der Kupplungskennlinie (z.B. Nachstellung des Greifpunktes der Kupplung) ein Verschleißindex gebildet wird, der beispielsweise angibt, wie weit die Kupplung bereits verschlissen ist. Zusätzlich zu dem Verschleißindex wird ein weiterer betriebsabhängiger Kupplungswert gebildet, in dem beispielsweise die Temperatur der Reibscheiben ermittelt wird und über die Zeitdauer integriert wird, während der die Temperatur einen kritischen Wert übersteigt.

Der Erfindung liegt die Aufgabe zugrunde, kritische Belastungszustände einer Kupplung, die beispielsweise zu einer Schädigung der Kupplung in Folge einer Überbelastung ihrer Reibbeläge in Folge kurzzeitig lokal zu hoher Temperaturen führen, zu erkennen, um solchen kritischen Belastungszuständen augenblicklich entgegenwirken zu können.

Eine erste Lösung dieser Aufgabe wird mit einem Verfahren zum Erkennen einer Schädigung einer Kupplung mit wenigstens zwei durch Reibeingriff Drehmoment übertragenden Bauteilen erzielt, welches Verfahren folgende Schritte enthält:

- Bestimmen der durch Schlupf zwischen den Drehmoment übertragenden Bauteilen in die Reibflächen der Bauteile eingetragenen Reibleistung L.

- Errechnen eines Einzelschädigungswertes ESW = f (L,t), wobei t die Zeit ist, und

- Werten als Kupplungseinzelschädigung, wenn ESW einen vorbestimmten Wert übersteigt.

Mit dem erfindungsgemäßen Verfahren wird eine unzulässig hohe Kupplungsbeanspruchung mit einem unzulässig hohem Leistungseintrag in die Reibflächen augenblicklich erkannt, so dass augenblicklich Gegenmaßnahmen eingeleitet werden können, wie Rücknahme der von einem Antriebsmotor aufgebrachten Leistung bzw. des aufgebrachten Drehmoments, rascheres Schließen der Kupplung usw.

Vorteilhaft ist, den Einzelschädigungswert ESW nur während der Zeitdauern zu berechnen, während der L einen Schwellwert übersteigt. Bei einer Reibleistung kleiner als der Schwellwert tritt praktisch keine Kupplungsschädigung oder ein Kupplungsverschleiß auf. Bei Fahren mit programmiertem permanenten Mikroschlupf wird durch den Schwellwert ein ständiger Schädigungs- oder Energieeintrag vermieden.

Die Funktion, anhand derer ESW errechnet wird, enthält vorteilhafterweise einen Term der Form $\int L^u dt$, wobei n eine Zahl größer Null ist.

Weiter hat die Funktion, anhand derer ESW errechnet wird, vorteilhafterweise die allgemeine Form:

ESW = f(p, T, t), wobei T eine einer Temperatur der Reibflächen entsprechende Größe ist.

Das erfindungsgemäße Verfahren kann dahingehend weitergebildet werden, dass durch Summieren der Einzelschädigungswerte ESW ein Gesamtschädigungswert GSW ermittelt wird und die Reibflächen als verschlissen gewertet werden, wenn GSW einen Grenzwert übersteigt.

Bei der Ermittlung von GSW werden vorteilhafterweise die aus einer vorherigen Kupplungsbetätigung resultierende Größe von ESW und die Zeitdauer seit dem Ende der zurückliegenden Kupplungsbetätigung berücksichtigt werden.

Der die Vorrichtung betreffende Teil der Erfindungsaufgabe wird gelöst mit einer Vorrichtung zum Erkennen einer Schädigung einer Kupplung mit wenigstens zwei durch Reibeingriff Drehmoment übertragenden Bauteilen, welche Vorrichtung eine Einrichtung zum Bestimmen der Reibleistung, die in die in Reibeingriff befindlichen Reibflächen der Bauteile eingetragen wird, und eine Auswerteinheit enthält, die eine Schädigung entsprechend einem der vorgenannten Verfahren ermittelt.

Mit Vorteil enthält die erfindungsgemäße Vorrichtung eine Einrichtung zur Bestimmung einer Temperatur der Reibflächen und ermittelt die Auswerteinheit einer Einzelschädigung entsprechend der Funktion der allgemeinen Form

ESW = f(L, T, t).

Mit Vorteil enthält die Auswerteeinheit ein Modell, das eine Einzelschädigung abhängig vom Zeitverlauf der Reibleistung angibt, und ein weiteres Modell, das eine Einzelschädigung abhängig von der Temperatur der Reibflächen enthält, und setzt die beiden so ermittelten Einzelschädigungen in gegenseitige Beziehung.

Der Erfindung, die für weitgehend alle Arten von mittels Reibung Kraft oder Drehmoment übertragenden Bauteilen eingesetzt werden kann, wird im Folgenden anhand schematischer Zeichnungen beispielsweise und mit weiteren Einzelheiten erläutert.

In den Figuren stellen dar:

Figur 1     ein Schema eines Antriebsstrangs eines Kraftfahrzeugs,

Figur 2     Kurven, die einen Reibbelagverschleiß bei unterschiedlichen Energieeinträgen und jeweils konstanter Reibleistung angeben,

Figur 3    Kurven, die einen Reibbelagverschleiß bei unterschiedlichen Reibleistungen und jeweils konstantem Energieeintrag angeben, und

Figur 4    ein Schema zur Erläuterung unterschiedlicher Kupplungsschutzstrategien.

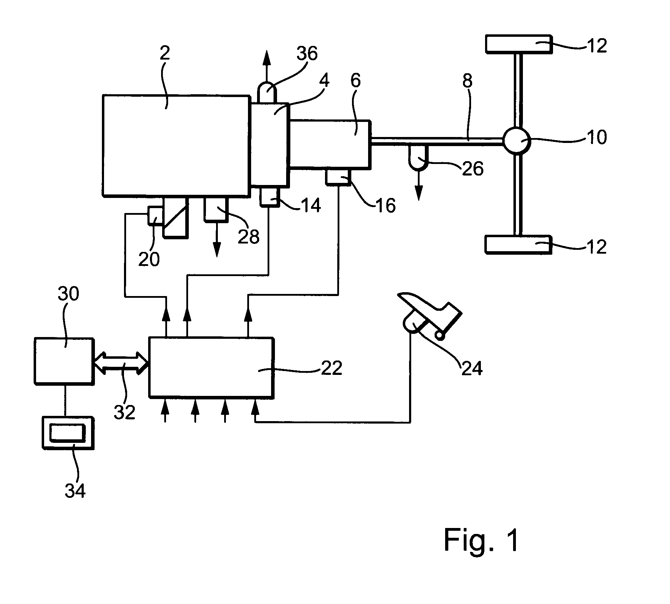

Gemäß Figur 1 enthält ein Antriebsstrang eines Kraftfahrzeugs eine Brennkraftmaschine 2, die über eine Kupplung 4 und ein Getriebe 6 mit einer Kardanwelle 8 verbunden ist, die wiederum über ein Differential 10 angetriebene Räder 12 eines Kraftfahrzeugs antreibt. Es versteht sich, dass der Antriebsstrang auch ein Antriebsstrang eines Vorderrad getriebenen Fahrzeugs oder eines Allrad getriebenen Fahrzeugs sein könnte.

Bei der Kupplung 4 handelt es sich bevorzugt um eine Reibscheibenkupplung mit trockenen Reibscheiben, welche Kupplung 4 mittels eines Aktors 14 betätigt wird.

Das Getriebe 6 kann jedwelcher Bauart sein. Es kann ein Handschaltgetriebe sein, ein automatisiertes Handschaltgetriebe, ein automatisches Getriebe mit Planetensätzen, ein CVT Getriebe usw. Im dargestellten Beispiel ist das Getriebe 6 beispielsweise ein automatisiertes Handschaltgetriebe, das von einer Aktoreinrichtung 16 betätigt wird.

Die Brennkraftmaschine 2 weist ein Leistungsstellglied 18 auf, das von einem Aktor 20 betätigt wird.

Zur Betätigung der Aktoren 14, 16 und 20 ist eine elektronische Steuereinrichtung 22 vorgesehen, die einen Mikroprozessor sowie Programm- und Datenspeicher enthält und deren Eingänge mit einem Fahrpedalsensor 24, einem Sensor 26 zur Erfassung der Drehzahl der Kardanwelle 8, einem Sensor 28 zur Erfassung der Drehzahl der Kurbelwelle der Brennkraftmaschine 2 sowie gegebenenfalls weiterer Sensoren, wie einem Stellungssensor zur Erfassung der Stellung eines Betätigungsgliedes der Kupplung 4, einem Sensor zur Erfassung der Temperatur der Brennkraftmaschine, einem Sensor zur Erfassung der Stellung eines Bremspedals usw. verbunden sind. Die Funktionen der elektronischen Steuereinrichtung 22 können auf unterschiedliche Steuergeräte verteilt sein, die über ein BusSystem miteinander verbunden sind. Aufbau und Funktion der bisher beschriebenen Anordnung sind an sich bekannt und werden daher nicht im Einzelnen erläutert.

Erfindungsgemäß ist eine Auswerteeinheit 30 vorgesehen, die beispielsweise in die elektronische Steuereinrichtung 22 integriert oder mit diese über eine Bus-Leitung 32 verbunden ist. Mit der Auswerteinheit 30 ist eine Anzeigeeinheit 34 verbunden, beispielsweise eine optische und/oder akustische Anzeigeeinheit zur Anzeige einer Warninformation.

Ein Problem, das bei herkömmlichen Antriebssträngen mit automatischer bzw. automatisierter Kupplung 4 auftritt, liegt darin, dass in Extremsituationen auftretender erhöhter Kupplungsverschleiß nicht erkannt wird, was zu einer Kupplungsschädigung führen kann, die erfindungsgemäß vermeidbar ist.

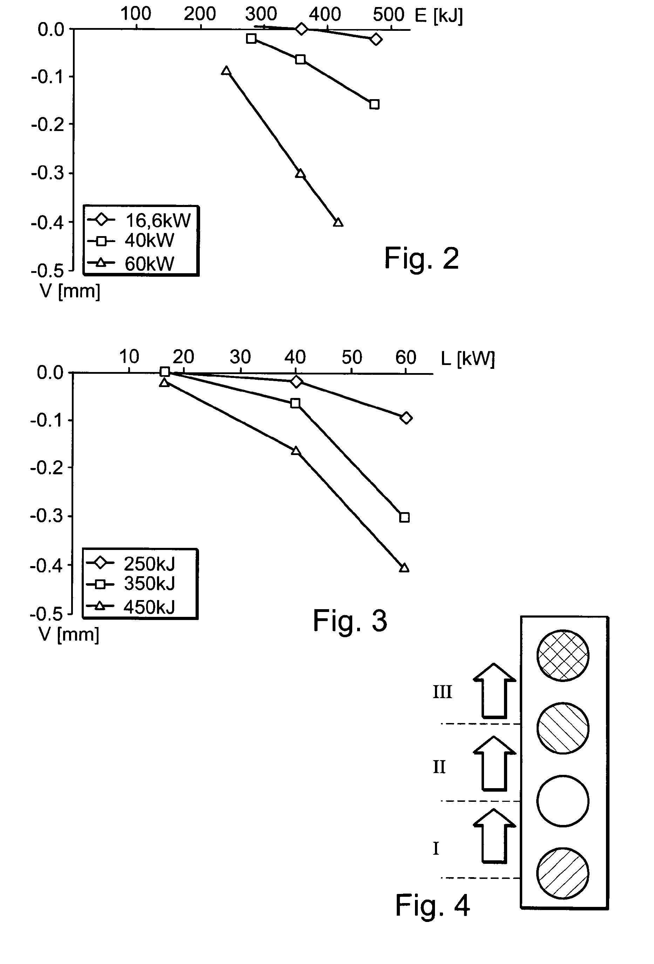

Die Figuren 2 und 3 zeigen Ergebnisse von Verschleißmessungen, jeweils auf der Ordinate als V in Millimetern angegeben. Die Figuren stellen jeweils den Belagverschleiß dar, der nach neun Lastspielen gemessen wurde. Die Figur 2 zeigt drei Kurven, bei denen mit jeweils konstanter Reibleistung unterschiedliche Energieeinträge erfolgten. Die Figur 3 zeigt drei Kurven, bei denen mit jeweils konstantem Energieeintrag unterschiedliche Reibleistungen übertragen wurden. Wie ersichtlich, nimmt der Verschleiß bei konstantem Energieeintrag mit zunehmender Reibleistung überproportional zu.

Aus den Messergebnissen kann ein Einzelschädigungswert ESW als Maß für die Schädigung der Kupplung bzw. deren Verschleiß abgeleitet werden, beispielsweise nach folgenden Formeln:

$$ESW_1 = \int L^2 dt \; (= L * E)$$

$$ESW_2 = \int L^3 dt \; (= L^2 * E)$$

$$ESW_3 = \int L^4 dt \; (= L^3 * E),$$

wobei

L jeweils der Schlupfleistung entspricht und E die Schlupfenergie angibt. Der in Klammern gesetzte Ausdruck entspricht dem jeweiligen Integral bei konstanter Schlupfleistung L.

Die Schlupfleistung, die bei schlupfender Kupplung 6 in deren Reibscheiben eingetragen wird, lässt sich in der Steuereinrichtung 22 oder der Auswerteinheit 30 errechnen, indem beispielsweise die von der Brennkraftmaschine 2 an die Kupplung 4 abgegebene Leistung aus dem von der Brennkraftmaschine abgegebenen Moment, das anhand der Stellung des Leistungsstellorgans, der Temperatur und einem Kennfeld ermittelt wird, und der Drehzahl bestimmt wird, und das auf das Fahrzeug wirkende Antriebsmoment aus dessen Fahrwiderstand, beispielsweise Geschwindigkeit, Fahrzeugkennfeld, Steigung oder einem in der Kardanwelle 8 wirksamen Moment und der Drehzahl der Kardanwelle bestimmt wird. Durch Differenzbildung beider Leistungen, bei der zusätzlich der Getriebewirkungsgrad 6 und Verluste zwischen dem Getriebe und den Antriebsrädern berücksichtigt werden können, lässt sich die in die Kupplung 4 eingetragene Reibleistung online ermitteln, d.h. ohne zeitliche Verzögerung, mit der jede von den Reibflächen beabstandete Temperaturmessung behaftet ist.

Diese Reibleistung wird praktisch augenblicklich in eine Temperaturerhöhung der Reiboberflächen umgesetzt und kann nur begrenzt durch Kühlung der Kupplung abgeführt werden. Wenn dadurch unmittelbar in den Reiboberflächen eine unzulässig hohe Temperatur auftritt, die beispielsweise zu einer Sinterung des Materials führt, ist die Kupplung irreversibel geschädigt. Es ist daher vorteilhaft, als unzulässig hohe Kupplungsbeanspruchung zu werten, wenn die Reibleistung während einer minimalen vorbestimmten Zeitdauer eine von der Zeitdauer abhängigen Grenzwert übersteigt. Sobald eine unzulässig hohe Kupplungsbeanspruchung festgestellt wird, wird dies in der Anzeigeeinheit 34 angezeigt und ergreift die elektronische Steuereinrichtung Gegenmaßnahmen, beispielsweise indem die von der Brennkraftmaschine abgegebene Leistung zurückgenommen wird und/oder die Kupplung weiter geöffnet oder geschlossen wird, je nach dem in welche Richtung die in die Kupplung eingetragene Reibleistung abnimmt.

Ingesamt hat sich herausgestellt, dass es zweckmäßig ist, je Kupplungsbetätigung bzw. je Schlupfvorgang der Kupplung einen Einzelschädigungswert ESW entsprechend der Formel

$$ESW = f(L, t)$$

zu berechnen. f(L, t) ist gleich oder enthält wenigstens einen Term der Form $\int L^n dt$, wobei über die Zeitdauer des Leistungseintrags integriert wird.

Noch allgemeiner kann ESW als einer Funktion

$$ESW = f(L, T, t)$$

berechnet werden, wobei T eine mit einem weiteren Sensor 36 gemessene Temperatur der Kupplung ist, so dass die eingetragene Reibleistung beispielsweise umso höher bewertet wird, je höher die gemessene Temperatur der Kupplung ansteigt. Die Temperatur der Kupplung kann auch aus einem Kupplungsmodell ermittelt werden, indem für die spezielle Kupplung aus dem Temperaturverlauf der Reibleistung die Kupplungstemperatur berechnet wird.

Durch Summation bzw. Integration der Einzelschädigungswerte kann ein Gesamtschädigungswert der Kupplung ermittelt werden, der den Gesamtverschleiß der Kupplung angibt. Wenn zur Berechnung der Einzelschädigungswerte ESW nicht die Temperatur zusätzlich berücksichtigt wird, ist es vorteilhaft, bei der Integration bzw. Addition der Einzelschädigungswerte die Zeitdauer zu berücksichtigen, die zwischen zwei Kupplungsbetätigungen liegt, indem der Einzelschädigungswert nach Beendigung der Kupplungsbetätigung nicht sofort auf Null gesetzt wird, sondern entsprechend einer Zeitfunktion auf Null abnimmt. Diese Zeitfunktion kann linear, ein Polynom, ein Verzögerungsglied oder eine Exponentialfunktion sein. Bei einer nachfolgenden Kupplungsbetätigung startet die Berechnung des Einzelschädigungswertes ESW dann mit dem Wert, auf den der Einzelschädigungswert aus der vorhergehenden Kupplungsbetätigung abgenommen hat. Die Zeitdauer zwischen zwei Ereignissen bzw. Kupplungsbetätigungen kann auch bei temperaturabhängiger Berechnung des Schädigungswertes berücksichtigt werden.

Weiter ist vorteilhaft, den Gesamtschädigungswert GSW mit einem Gesamtschädigungswert zu vergleichen, der unter Berücksichtigung lediglich der Temperatur der Kupplung oder der jeweiligen Nachstellung einer Kupplungskennlinie in an sich bekannter Weise ermittelt wird.

Anhand der Figur 4 wird schematisch eine Kupplungsschutzstrategie erläutert.

In der Ampeldarstellung nimmt die Gefährdung der Kupplung von unten nach oben zu. Der Bereich I stellt beispielsweise einen Bereich dar, bei dem bei einem normalen Kupplungsbetätigungsvorgang nach der Formel

$$ESW = \int L^3 dt = (L^2 * E)$$

ein Einzelschädigungswert ESW von beispielsweise kleiner 1,5 kW$^2$kJ/(cm$^4$kg) erzielt wird, oder sich aus einem Temperaturmodell in einer Tiefe von 4 mm eine Temperatur von weniger als 250°C ergibt. Der Bereich I entspricht einer normalen Kupplungsbetätigung und bedarf keines Kupplungsschutzes.

Im Bereich II liegt ESW über 1,5 kW$^2$kJ/(cm$^4$kg) und beispielsweise unter 2,2 kW$^2$kJ/(cm$^4$kg) bzw. liegt beispielsweise die Temperatur einer Anpressplatte der Kupplung in 4 mm Tiefe unter der Reibfläche zwischen 250°C und 300°C. An der Obergrenze dieses Bereiches II ist eine Kupplungsschutzstrategie erforderlich, d.h. es muss verhindert werden, dass ESW diesen Wert erreicht, beispielsweise durch elektronische Rücknahme der Leistung der Brennkraftmaschine.

Wenn noch höhere Einzelschädigungswerte oder Temperaturen erreicht werden, würde dies zu einem Fading der Kupplung führen, was sowohl die Kupplung als auch die Betriebssicherheit des Fahrzeugs gefährden würde.

**Bezugszeichenliste**

| | |
|---|---|
| 2 | Brennkraftmaschine |
| 4 | Kupplung |
| 6 | Getriebe |
| 8 | Kardanwelle |
| 10 | Differential |
| 12 | Rad |

14 Aktor
16 Aktoreinrichtung
18 Leistungsstellglied
20 Aktor
22 elektronische Steuereinrichtung
24 Fahrpedalsensor
26 Sensor
28 Sensor
30 Auswerteinheit
32 Bus-Leitung
34 Anzeigeeinheit
36 Sensor

**Patentansprüche**

1. Verfahren zum Erkennen einer Schädigung einer Kupplung mit wenigstens zwei durch Reibeingriff Drehmoment übertragenden Bauteilen, enthaltend folgende Schritte:

   - Bestimmen der durch Schlupf zwischen den Drehmoment übertragenden Bauteilen in die Reibflächen der Bauteile eingetragenen Reibleistung L,
   - Errechnen eines Einzelschädigungswertes ESW entsprechend der Funktion ESW = f(L, t), wobei t die Zeit ist, und
   - Werten als Kupplungseinzelschädigung, wenn ESW einen vorbestimmten Wert übersteigt.

2. Verfahren nach Anspruch 1, wobei der Einzelschädigungswert ESW nur während der Zeitdauer errechnet wird, während der L einen Schwellwert übersteigt.

3. Verfahren nach Anspruch 1 oder 2, wobei als unzulässig hohe Kupplungsbeanspruchung gewertet wird, wenn die Reibleistung während einer Zeitdauer einen von der Zeitdauer abhängigen Grenzwert übersteigt.

4. Verfahren nach einem der Ansprüche 1 bis 3, wobei die Funktion, anhand derer ESW errechnet wird, wenigstens einen Term der Form $\int L^n dt$ enthält, wobei n eine Zahl größer Null ist.

5. Verfahren nach einem der Ansprüche 1 bis 4, wobei die Funktion, anhand derer ESW errechnet wird, die allgemeine Form hat:

$$ESW = f(L, T, t),$$

wobei T eine einer Temperatur der Kupplung entsprechende Größe ist.

6. Verfahren nach einem der Ansprüche 1 bis 5, wobei ein Gesamtschädigungswert GSW der Kupplung durch Summierung der Einzelschädigungswerte ermittelt wird und die Reibflächen als verschlissen gewertet werden, wenn GSW einen Grenzwert übersteigt.

7. Verfahren nach Anspruch 6, wobei bei der Ermittlung von GSW die aus einer vorherigen Kupplungsbetätigung resultierende Größe von ESW und die Zeitdauer seit dem Ende der zurückliegenden Kupplungsbetätigung berücksichtigt werden.

8. Vorrichtung zum Erkennen einer Schädigung einer Kupplung mit wenigstens zwei durch Reibeingriff Drehmoment übertragenden Bauteilen, enthaltend:

   - eine Einrichtung zum Bestimmen der Reibleistung, die in in Reibeingriff befindlichen Reibflächen der Bauteile eingetragen wird, und
   - eine Auswerteinheit, die eine Schädigung entsprechend einem Verfahren nach einem der Ansprüche 1 bis 4 ermittelt.

9. Vorrichtung nach Anspruch 8, enthaltend eine Einrichtung zum Bestimmen einer Temperatur der Kupplung, wobei die Auswerteinheit die Einzelschädigung entsprechend dem Verfahren nach Anspruch 5 ermittelt.

10. Vorrichtung nach Anspruch 9, wobei die Auswerteinheit ein Modell enthält, das eine Einzelschädigung abhängig vom Zeitverlauf der Reibleistung angibt, und ein Modell enthält, das eine Einzelschädigung abhängig von der Temperatur der Reibflächen enthält und die beiden derart ermittelten Einzelschädigungen in gegenseitige Beziehung setzt.

Fig. 1

Fig. 2

Fig. 3

Fig. 4